# EUROPEAN PATENT APPLICATION

(11) **EP 4 468 121 A1**
(43) Date of publication of application: **27.11.2024**
(21) Application number: 23175149.6
(22) Date of filing: 24.05.2023
(51) Int. Cl.: G06F 3/01

(54) **SYSTEM, METHOD, AND COMPUTER PROGRAM FOR CONTROLLING A USER INTERFACE**

(71) Applicant: Leica Instruments (Singapore) Pte. Ltd., Singapore 608924 (SG)
(72) Inventor: THEMELIS, George, 88131 Lindau (DE)
(74) Representative: 2SPL Patentanwälte PartG mbB

(57) **Abstract**

Examples relate to a system, to a method and to a computer program for controlling a user interface. The system is configured to determine a position of a first point of reference based on a position of a first point on the body of a user. The system is configured to determine a position of a second point of reference based on a position of a pointing indicator used by the user. The system is configured to determine a position in the user interface based on the first point of reference and the second point of reference. The system is configured to determine a response based on the determined position in the user interface. The act of determining a response comprises determining an identity of the user, and generating a visual representation of the user pointing towards the position in the user interface based on the determined identity of the user and based on the determined position in the user interface. The system is configured to generate a display signal comprising the user interface with the visual representation of the user pointing towards the position in the user interface. The system is configured to provide the display signal to a display device.

## Description

### Technical field

Examples relate to a system, to a method and to a computer program for controlling a user interface.

### Background

Gesture-based input refers to a way of interacting with a computer, mobile device, or any other electronic device through the use of gestures or movements made by the user's body. These gestures are captured by built-in sensors, such as cameras or depth sensors, and are translated into commands that the device understands. Examples of gesture-based input include swiping, pinching, tapping, shaking, or tilting a device to navigate through applications, adjust settings, or perform specific actions. Gesture-based input is becoming more and more common because it is a natural and intuitive way of interacting with technology, and it allows for hands-free or touch-free control, making it useful for people with physical disabilities.

Modern teaching and meetings are typically based on digital displays such as monitors and projectors. When blackboards or whiteboards are used, laser pointers are used to point to a specific point on the projection screen. While laser pointers are, in theory, also usable on displays, they are less desirable, as they are not visible when the content of the monitor is also recorded or streamed to another location. Laser pointers also require a separate device for each user, and the laser spots are not easy to be distinguished beyond a limited number of laser colors and do not provide digital communication with the screen, and thus do not allow controlling the device. Some users, during presentations, move their hands or antenna-like pointers physically on the screen or even use the shadow to point at the screen. Physically pointing the screen is unpractical and cannot be used in virtual meetings. Some "laser pointer-like" devices use gyroscopes to control a digital pointer on the screen. Gyroscope-based digital pointers require a separate device for each user, do not allow a direct point and click like a touch screen but operate as free-floating mice, and in order to distinguish multiple users, require prior assignment of each device to a user. Also, console gaming platforms often offer accessories that allow control of pointing on the virtual game view, such as gun-shaped game controllers. In certain applications, such as usability studies, eye-trackers are used to detect and often visualize the gaze of the user. However, eye trackers are typically used by individual users, and require each user to wear a device and require a fixed relative position of the eye-tracker and screen. Thus, it is practically impossible to be used in a collaborative manner by multiple users around a single display.

There may be a desire for an improved concept for multi-person collaboration using a digital display.

### Summary

This desire is addressed by the subject-matter of the independent claims.

Various examples of the present disclosure are based on the finding, that, using visual tracking technology, a computer system can determine where different users are pointing to on a digital display. For this purpose, two points are determined per user - one point at the body (e.g., at an eye, or between the eyes), and one point at a pointing indicator (e.g., an index finger or a pointing stick), to determine where the respective user is pointing at. This position is highlighted on the digital display. Moreover, a visual representation of the user is generated and also shown on the display, with a link between the visual representation of the user and the being shown as well. In effect, a visual representation of a user pointing at a certain position in the user interface is generated and shown on the collaborative display. Using this technique, it becomes evident where the respective users are pointing at on the respective digital display. This is particularly important in scenarios where collaboration is performed, e.g., during surgical procedures, where the main surgeon can see where one or multiple assisting surgeons or even a remote specialist is/are pointing at, e.g., while looking through the oculars of the microscope, or while using a head-mounted display. This can improve collaboration between multiple people, in particular in scenarios where it is relevant where the collaborators are pointing at the screen, such as in surgical procedures, where a surgical site is shown on the screen and discussed by the surgical personnel.

Some aspects of the present disclosure relate to a system for controlling a user interface. The system comprises one or more processors. The system is configured to determine a position of a first point of reference based on a position of a first point on the body of a user. The system is configured to determine a position of a second point of reference based on a position of a pointing indicator used by the user. The system is configured to determine a position in the user interface based on the first point of reference and the second point of reference. The system is configured to determine a response based on the determined position in the user interface. The act of determining a response comprises determining an identity of the user, and generating a visual representation of the user pointing towards the position in the user interface based on the determined identity of the user and based on the determined position in the user interface. The system is configured to generate a display signal comprising the user interface with the visual representation of the user pointing towards the position in the user interface. The system is configured to provide the display signal to a display device. By determining the position in the user interface based on the two points of reference, the position in the user interface represents the position the user is pointing at from the user's point of view. By generating the visual representation of the user pointing towards the position in the user interface, it becomes evident where the respective users are pointing at on the respective digital display. This is particularly useful in scenarios where collaboration is useful, e.g., during surgical procedures, and can improve collaboration between multiple people, in particular in scenarios where it is relevant where the collaborators are pointing at the screen, such as in surgical procedures, where a surgical site is shown on the screen.

For example, the system may be configured to generate the visual representation of the user pointing towards the position in the user interface with a positional indicator highlighting the determined position in the user interface, an indicator representing the identity of the user and a visual link between the positional indicator and the indicator representing the identity of the user. This way, both the identity of the user and the position the user is pointing at becomes apparent, which helps other users put into context what the respective user is saying about the highlighted position in the user interface, in particular in high-stakes situations such as the aforementioned surgical procedures.

In various examples, the indicator representing the identity of the user may comprise a textual representation of the identity of the user. A textual representation has a low rendering complexity. However, the system may be required to determine the identity of the user to be able to generate such a textual representation.

Alternatively, or additionally, the indicator representing the identity of the user may comprise an image or an avatar of the user. In the case of the indicator being an image of the user, users can use the system in an ad-hoc fashion, as an image can be obtained without having to determine the actual identity of the user.

While the present concept is already useful for use by a single user, e.g., in the aforementioned surgical scenario, where an assistant is pointing at the screen and the surgeon sees where the assistant is pointing towards or in remote meetings, it becomes increasingly more useful in meetings with multiple users pointing at the screen. For example, the user may be a first user and the position in the user interface may be a first position in the user interface. The system may be further configured to determine a second position in the user interface for a second user, to determine the identity the second user. The system may be configured to generate a visual representation of the first user pointing towards the first position in the user interface and of the second user pointing towards the second position in the user interface. The system may be configured to generate the display signal comprising the user interface with the visual representation of the first user pointing towards the first position in the user interface and of the second user pointing towards the second position in the user interface. This way, multiple users pointing towards the same content may be disambiguated.

In some cases, the second position in the user interface may also be determined by the system tracking the second user locally. For example, the act of determining the second position in the user interface may be based on a first point of reference and a second point of reference determined for the second user. This improves the collaboration when both users are standing in front of the same user interface.

Alternatively, or additionally, the act of determining the second position in the user interface and the act of determining the identity of the second user may comprise obtaining information on the second position in the user interface and information on the identity of the second user from a further system being remote from the system. This way, remote collaboration can be achieved.

However, the system might not only be a receiver of information on a second position, it may also provide the information on the position of the (first) user to other systems for remote collaboration. For example, the system may be configured to provide information on the position in the user interface and information on the identity of the user to a further system being remote from the system. This way, remote collaboration can be achieved.

In some cases, it may be sufficient to show images of the users pointing towards the user interface without tracking their identity. In some cases, e.g., when textual representations or avatar representations are used, their actual identity may also be determined. For example, the system may be configured to obtain imaging sensor data of a camera sensor, and to determine the identity of at least the user based on the imaging sensor data, the imaging sensor data showing at least the user. This can be done using imaging sensor data from the camera or cameras being used to track the users, for example.

Both the determination of the points of reference and the identity of the user may be determined using sensor data of various types of cameras. For example, the system may be configured to process at least one of depth sensor data of a depth sensor, imaging sensor data of a camera sensor and stereo imaging sensor data of a stereo camera to determine at least one of the position of the first point of reference and the position of the second point of reference, and an identity of the user. For example, sensors that enable determination of a 3D position of the respective points, such as the stereo imaging sensor data or the depth sensor data, may be particularly suitable for determining the position of the points of reference and/or of the devices. To improve the quality of the determination of the respective points of reference when depth sensor data is used, the depth sensor data may be used together with (co-registered) imaging sensor data. The resulting sensor data may also be used to determine the identity of the users, or to extract images of the users to display in the user interface.

To determine the positions of the points of reference, which are both either at the body of the person or held by the person, a skeletal model may be used. For example, the system may be configured to determine the positions of joints of a skeletal model of the body of the user by processing the respective sensor data, and to determine at least one of the position of the first point of reference and the position of the second point of reference based on the positions of the joints of the skeletal model. There are various different pre-trained machine-learning models that enable generation of a skeletal model, which may lower the implementation complexity of the system.

Some aspects of the present disclosure relate to a method for controlling a user interface. The method comprises determining a position of a first point of reference based on a position of a first point on the body of a user. The method further comprises determining a position of a second point of reference based on a position of a pointing indicator used by the user, determining a position in the user interface based on the first point of reference and the second point of reference. The method comprises determining a response based on the determined position in the user interface. The act of determining the response comprises determining an identity of the user, and generating a visual representation of the user pointing towards the position in the user interface based on the determined identity of the user and based on the determined position in the user interface. The method comprises generating a display signal comprising the user interface with the visual representation of the user pointing towards the position in the user interface. The method comprises providing the display signal to a display device.

An aspect of the present disclosure relates to computer program with a program code for performing the above method when the computer program is run on a processor.

### Short description of the Figures

Some examples of apparatuses and/or methods will be described in the following by way of example only, and with reference to the accompanying figures, in which
- Fig. 1a: shows a schematic diagram of an example of a system for controlling a user interface;
- Fig. 1b: shows a schematic diagram of examples of points of reference when the user interface is shown on a screen;
- Fig. 1c: shows a schematic diagram of examples of points of reference when the user interface is projected or a haptic user interface of a device;
- Fig. 1d: shows a schematic diagram of an example of a surgical imaging system comprising the system;
- Fig. 2: shows a schematic diagram of a visualization of multiple users;
- Fig. 3: shows a flow chart of an example of a method for controlling a user interface; and
- Fig. 4: shows a schematic diagram of a system comprising an imaging device and a computer system.

### Detailed Description

Various examples will now be described more fully with reference to the accompanying drawings in which some examples are illustrated. In the figures, the thicknesses of lines, layers and/or regions may be exaggerated for clarity.

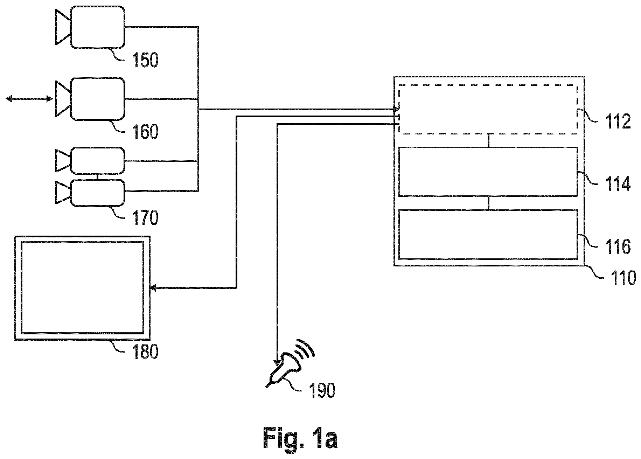

Fig. 1a shows a schematic diagram of an example of a system 110 for controlling a user interface. In general, the system 110 may be implemented as a computer system. The system 110 comprises one or more processors 114 and, one or more interfaces 112 and/or one or more storage devices 116. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other components, such as a depth sensor 160, a camera sensor 150, a stereo camera 170, a display device 180, a projection device 185 and/or an emitter 190 of a contactless tactile feedback system), and with the one or more storage devices 116 (for storing information, such as machine-readable instructions of a computer program being executed by the one or more processors). In general, the functionality of the one or more processors 114 may be implemented by the one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

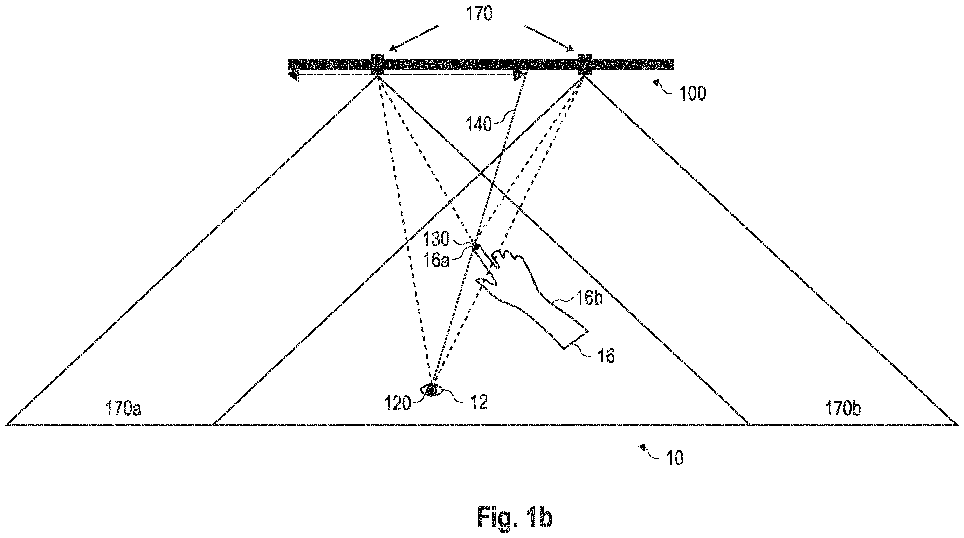

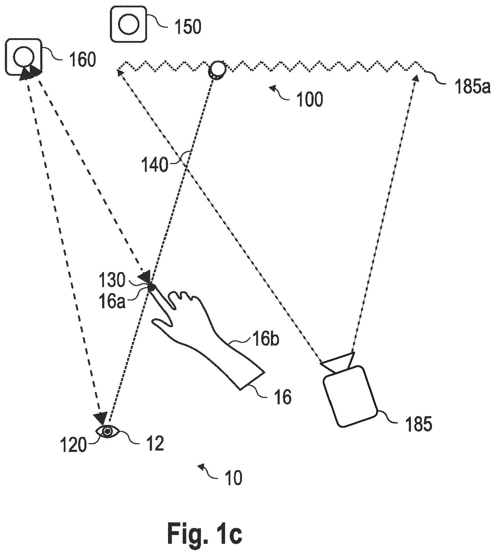

In the following, the functionality of the system is illustrated with respect to Figs. 1b and 1c, in which various points of reference and the user interface are shown. The system 110 is configured to determine a position of a first point of reference 120 based on a position of a first point 12 on the body of a user 10. The system 110 is configured to determine a position of a second point of reference 130 based on a position of a pointing indicator 16 used by the user. The system 110 is configured to determine at least one of a position in the user interface, an element of the user interface and a device being accessible via the user interface based on the first point of reference and the second point of reference. The system 110 is configured to determine a response based on at least one of the determined position in the user interface, the determined element of the user interface and the determined device. In particular, the determined response may be to control the user interface based on the determined position in the user interface or element of the user interface.

Various examples of the proposed concept are based on the finding that, in order to improve the intuitiveness of controlling a user interface by pointing at it, not only the pointing indicator being used (e.g., the hand, or a pointing stick) is to be tracked, but also another point of reference, which is used, together with the pointing indicator, to establish where the user is pointing from the user's point of view. Therefore, in the proposed concept, two points of reference are determined - a first point of reference at the body of the person (e.g., at the head/face, or at the sternum), and a second point of reference at a pointing indicator used by the person (e.g., at the hand/index finger, or at a pointing device, such as a pointing stick, pen, pencil, or scalpel). Using these two points of reference, not only the relative motion of the pointing indicator can be tracked, but an extrapolation can be made to determine the position (or element or device) the user is pointing at. Therefore, the proposed concept starts with determining the first and second point of reference.

The system is configured to determine the position of the first point of reference 120 based on a position of a first point 12 on the body of the user 10. As outlined above, this first point 12 on the body of the user 10 is a point that can be used as starting point for establishing the point of view of the user. Therefore, the first point 12 may preferably a point at the head/face of the user, such as the forehead, an eye, the position between two eyes, the nose, or the chin of the user. In other words, the system may be configured to determine the first point of reference based on the position of one or both eyes 12 of the user (as shown in Figs. 1b, 1c. for example). As most humans use stereoscopic vision, the selection of an eye (or both eyes) as first point of reference may be supported by heuristics or machine-learning-based approaches to further improve the precision. As a compromise, the system may be configured to determine the first point of reference based on the position of both eyes 12 of the user (e.g., between the positions of both eyes). Alternatively, a (system) pre-defined eye or a user-defined eye (e.g., the left or right eye) may be used. In other words, the system may be configured to determine the first point of reference based on the position of a pre-defined or user-defined eye 12 of the user. Alternatively, the system may be configured to select one of the eyes based on the second point of reference, and in particular based on the proximity to the second point of reference. In other words, the system may be configured to determine the first point of reference based on a position of the eye 12 of the user being in closer proximity to the second point of reference. Alternatively, the system may be configured to determine a dominant eye of the user, e.g., by processing imaging sensor data or stereo imaging sensor data to determine whether the user occasionally only uses one eye (and closes the other) and selecting the eye that remains open as dominant eye. Alternatively, the dominant eye may be determined based on previous attempts of the user at controlling the user interface. For example, the system may be select an eye as dominant eye by initially calculating two positions (and intersecting elements) in the user interface based on two different first points of reference based on the positions of both eyes, and determining one of the eyes as dominant eye if a corresponding position in the user interface intersects with a user interface element. In other words, the system may learn which eye is dominant from inference and use this eye for future calculations. The system may be configured to determine the first point of reference based on a position of the dominant eye 12 of the user.

In addition to the first point of reference, the system is configured to determine the position of the second point of reference 130 based on the position of a pointing indicator 16 used by the user. In the present disclosure, the term "pointing indicator" is used, which can both refer to a hand or finger (preferably index finder) being used to point at the user interface and to a tool that is being used for pointing at the user interface. In other words, the pointing indicator 16 is an entity (body part or tool) being used to point at the user interface. Accordingly, the system may be configured to determine the second point of reference based on a position of a finger 16a of the hand of the user. Additionally, or alternatively, the system may be configured to determine the second point of reference based on a position of a pointing device held by the user. In many cases, both may be an option - if the user uses their hand to point at the user interface, the position of the finger may be used, if, however, the user uses a tool, such as a pen, pencil, pointing stick, scalpel, endoscope etc. that can be considered an extension of the hand, the tool may be used. For example, the system may be configured to determine whether the user is holding a pointing device (e.g., tool/object) extending the hand towards the user interface, and to select the finger of the user if the user is pointing towards the user interface without such a tool/object, and to select the pointing device if the user is pointing towards the user interface with a pointing device. For example, a machine-learning model may be trained, using supervised learning and (stereo) imaging data and/or depth sensor data and corresponding labels, to perform classification as to whether the user is holding a pointing device, and to perform the selection based on the trained machine-learning model. Alternatively, or additionally, image segmentation techniques may be used. The second point of reference may be determined accordingly, based on the position of (a tip of) the finger and based on the position of (a tip of) the pointing device.

In some examples, the user may intuitively swivel (i.e., adjust the pointing direction of) their finger (or pointing device, for that matter) to make fine corrections to the position the user is pointing at. Such swiveling motions may be taken into account too. For example, the system may be configured to determine the second point of reference based on a position of a wrist 16b and based on a position of one of an index finger 16a of the hand of the user and a pointing device held by the user. For example, the position of the second point of reference may be adjusted such, that the resulting intersection point in the user interface when an extrapolated line (in the following also denoted imaginary line) passing through the first and second point of reference up to the user interface is determined, is adjusted in line with the swiveling motion of the finger (and, in some case, disproportional to the change in position of the tip of the index finger).

To determine the respective points on the body (e.g., head, sternum), hand or pointing device, sensor data may be processed. For example, as shown in Fig. 1a, the system may be configured to obtain sensor data from one or more of a depth sensor 160, a camera sensor 150 (which may be combined with the depth sensor 160 to provide RGB-D (Red, Green, Blue-Depth) sensor data) and a stereo camera 170 (i.e., two camera sensors forming a stereo pair), and to determine the positions on the body, hand and/or pointing device based on the respective sensor data. In other words, the system may be configured to process at least one of depth sensor data of a depth sensor 160, imaging sensor data of a camera sensor 150, combined RGB-D sensor data of a combined depth sensor and camera sensor, and stereo imaging sensor data of a stereo camera 170 to determine at least one of the position of the first point of reference and the position of the second point of reference.

As both points of reference are at least related to parts of the body of the user (with the first point of reference being on the body, and the second point of reference being part of the hand or held by a hand of the user), three-dimensional (human) pose estimation may be applied on the respective sensor data to determine the respective points of reference. There are various algorithms and machine-learning-based approaches for generating three-dimensional pose-estimation data from two- and three-dimensional video data. They usually include generation of a three-dimensional skeletal model of the user based on the respective sensor data. Accordingly, the system may be configured to determine the positions of joints of a (three-dimensional) skeletal model of the body of the user by processing the respective sensor data. In the context of the present disclosure, the term "skeletal model" might not be understood in a biological sense. Instead, the skeletal model may refer to a pose-estimation skeleton, which is merely modeled after a "biological" skeleton. Thus, the generated three-dimensional pose-estimation data may be defined by a position of joints of a skeleton in a three-dimensional coordinate system, with the joints of the one or more skeletons being interconnected by limbs. Similar to above, the terms "joints" and "limbs" might not be used in their strict biological sense, but with reference to the pose-estimation skeleton referred to in the context of the present disclosure. Such a skeletal model may be generated using the respective sensor data specified above. Accordingly, the system may be configured to process at least one of the depth sensor data, the imaging sensor data, the combined RGB-D sensor data, and the stereo imaging sensor data to determine the skeletal model of the user. For example, machine-learning algorithms and machine-learning models that are known from literature or that are available off the shelf may be used for this purpose. Examples of such algorithms and models are given in the following. For example, Mehta et al: "vNect: Real-time 3D Human Pose Estimation with a Single RGB Camera" (2017) provide a machine-learning based three-dimensional pose estimation algorithm for generating a three-dimensional skeletal model from imaging data. Zhang et al: "Deep Learning Methods for 3D Human Pose Estimation under Different Supervision Paradigms: A Survey" (2021) provide a machine-learning based three-dimensional pose estimation algorithm for generating a three-dimensional skeletal model from RGB-D data. Lallemand et al: "Human Pose Estimation in Stereo Images" provide a machine-learning based three-dimensional pose estimation algorithm for generating a three-dimensional skeletal model from stereo imaging sensor data. Alternatively, an application-specific machine-learning model may be trained, in line with the approaches listed above.

The resulting skeletal model may now be used to determine the points of reference. In other words, the system may be configured to determine at least one of the position of the first point of reference and the position of the second point of reference based on the positions of the joints of the skeletal model. For example, the skeletal model may include, as joints, one or more of the position of the eyes of the user, the position of the forehead of the user, the position of the tip of the nose of the user, the position of the wrists of the user, the position of the tips of the (index) fingers of the user. In addition, the skeletal model may include an additional point representing the tip of a pointing device being held by the user. For example, the machine-learning model may be trained to include such an additional point in the skeletal model. Alternatively, the system may be configured to determine whether the user is using a pointing device to point at the user interface, to determine a position of the tip of the pointing device relative to a point on the hand of the user (based on the skeletal model and based on the respective sensor data), and to add a joint representing the tip of the pointing device to the skeletal model. For example, another machine-learning model may be trained to output the position of the tip of the pointing device relative to a point on the hand of the user, e.g., using supervised learning. For example, such a machine-learning model may be trained as regressor, using a skeletal model and the respective sensor data as input, and the relative position as desired output.

The first and second point of reference are now used to determine at least one of a position in the user interface, an element of the user interface and a device being accessible via the user interface. For this purpose, the system may be configured to determine the position in the user interface, the element of the user interface or the device by projecting an imaginary line 140 through the first point of reference and the second point of reference towards the user interface. The position in the user interface may correspond to the point where the imaginary line intersects the user interface. The element of the user interface may correspond to an element of the user interface that overlaps with the point in the user interface. The device may correspond to a device that is intersected by the imaginary line. However, the proposed concept is not limited to using a geometric approach that is based on projecting an imaginary line. Instead, a look-up table may be used to determine the position, element and/or device, or a machine-learning model may be trained to output the position, from which the element or device can be determined (similar to the case where an imaginary line is used). In this case, supervised learning may be used to train such a machine-learning model, using coordinates of the first and/or second point of reference, and optionally coordinates of the user interface, as training input and information on a position in the user interface as desired output.

In the present context, various positions are used, such as the point on the body/first point of reference, the second point of reference, the position in the user interface etc. These positions may be defined in a (or several) coordinate systems. For example, the first and second point of reference may be defined in a world coordinate system. If the coordinates of the user interface are known, e.g., also defined in the world coordinate system (which may be defined relative to the user interface), the imaginary line can be projected through the first and second points of reference towards the user interface, and the point of in the user interface (and element intersecting with the point) can be determined based on the point of intersection of the imaginary line. If another technique is used, such as a look-up table or trained machine-learning model, similarly, a world coordinate system or two separate coordinate systems may be used for the points of reference and the user interface. It is to be noted, that the user interface is not necessarily limited to being a two-dimensional user interface or a user interface that is being shown on a display device - in some examples, as will become clear in connection with Figs. 1b and 1c, the user interface may be a three-dimensional user interface, which may be either a real-world user interface with haptic/tactile input modalities, or a three-dimensional user interface being shown on a 3D display, a three-dimensional projection or a hologram.

The system is configured to determine a response based on the determined position in the user interface, the determined element of the user interface and/or the determined device. Such a response may be used to determine, based on the position or movement of the position in the user interface, whether the user is trying to interact with, and thus control, the user interface, or whether the user is not engaged with the user interface. In the latter case, the determined position and/or element of the user interface may be used to control the user interface. In other words, the system may be configured to control the user interface based on the determined position in the user interface or element of the user interface. In this context, the "element" may be a user interface element, such as a button, a label, a dropdown menu, a radio button, a checkbox, a rotational input, or a slider of a virtual user interface (being displayed on a screen or projected), or a button, a label, a radio button, a rotational knob, or a slider of a haptic/tactile "real-world" user interface (that is arranged, as dedicated input modalities, at a device).

To control the user interface, hand gestures may be used. For example, the system may be configured to identify a hand gesture being performed by the user, and to control the user interface based on the determined element and based on the identified hand gesture. For example, the system may be configured to process the sensor data, using a machine-learning model, to determine the hand gesture being used. Such a machine-learning model may be trained, using supervised learning, as a classifier, using the respective sensor data as input data and a classification of the gesture as desired output. For example, examples of such a machine-learning model and algorithm can be found in Bhushan et al: "An Experimental Analysis of Various Machine Learning Algorithms for Hand Gesture Recognition" (2022). Various hand gestures may be identified and used to control the user interface. For example, the system may be configured to identify at least one of a clicking gesture, a confirmation gesture, a rotational gesture, a pick gesture, a drop gesture, and a zoom gesture. For example, to perform the clicking gesture, the pointing indicator may be moved intentionally towards the user interface, e.g., for a pre-defined distance in at most a pre-defined time. This gesture may be used to select a user interface element. To perform the rotational gesture, the user may rotate the hand. This gesture may be used to control a rotational input or rotational knob of the user interface. To perform the pick gesture and the drop gesture, the user may first move the pointing indicator intentionally towards an element of the user interface, draw the pointing indicator back towards the body (pick gesture), and move the pointing indicator towards another position in the user interface (drop gesture). To perform the zoom gesture, the user may move the hand, with palm pointed towards the user interface, towards or away from the user interface. Alternatively, the gestures may be implemented differently, and/or used to control different elements of the user interface.

To increase the confidence of the user controlling the user interface, visual feedback may be given to the user. In particular, the system may be configured to highlight the determined position in the user interface continuously using a positional indicator 230. In a screen-based user interface (as shown in Fig. 1b) or projection-based user interface (as shown as one example in Fig. 1c), such a positional indicator may be included in the representation of the (virtual) user interface itself, e.g., overlaid over the user interface. For example, the system may be configured to generate a display signal, with the display signal comprising the user interface (e.g., and the positional indicator). The system may be configured to provide the display signal to a display device 180, such as a display screen or a head-mounted display. Alternatively, the system may be configured to generate a projection signal, which may comprise (in some cases, where the user interface itself is being projected) the user interface, and the positional indicator. The system may be configured to provide the projection signal to a projection device 185 for projecting the projection signal onto the haptic user interface. It is to be noted, that such a projection can also be used with "haptic" user interfaces (i.e., user interfaces that are arranged, as haptic input modalities, at the respective devices being controlled, without including a projection of the user interface.

To allow the user to grasp the mechanism, the positional indicator may be provided in a shape that conveys whether the system has determined the correct position or item. For example, the system may be configured to generate the positional indicator with the shape of a hand based on a shape of the hand of the user. For example, the system may be configured to compute the shape of the hand of the user based on the respective sensor data, and generate the positional indicator based on the shape of the hand of the user (or based on a simplified hand shape). In some examples, the system may be configured to generate the shape of the positional indicator such, that, form the point of view of the user, the shape of the positional indicator extends beyond the shape of the hand of the user, e.g., by "exploding" the shape by a pre-defined absolute margin, such that the user can see the shape even if the hand partially obscures the user interface. Alternatively, the system may be configured to determine the position of the positional indicator such, that, form the point of view of the user, the positional indicator is offset by a pre-defined or user-defined offset (e.g., in two dimensions).

In addition, a visual representation of the identified hand gesture may be shown, e.g., as a pictogram representation of the hand gesture or of the functionality being controlled by the hand gesture. For example, the system may be configured to display a visual representation of the identified hand gesture via a display device 180 or via a projection device 185.

To add a tactile dimension, an emitter of a contactless tactile feedback system can be used to give tactile feedback to the user. For example, the system may be configured to control an emitter 190 of a contactless tactile feedback system based on at least one of the position in the user interface and the element of the user interface, and to provide tactile feedback to the user using the emitter according to the position in the user interface or according to the element of the user interface. For example, the emitter 190 may be one of an ultrasound emitter or array of ultrasound emitters, one or more laser emitters, one or more air emitters, or one or more magnetic field emitters. For example, when the position in the user interface intersects with an element (e.g., when the user moves the pointing indicator), tactile feedback may be given. Similarly, tactile feedback can be given when the user interface is being controlled, e.g., if a button is actuated by a clicking gesture or a rotational input/knob is rotated using a rotational gesture.

In some examples, different levels or patterns of tactile feedback may be given. for example, a first level or first pattern of tactile feedback may be given when an element of the user interface or device is selected, and a second level or second pattern of tactile feedback may be given while the user interacts with the element of the user interface or with the device. A third level or third pattern of tactile feedback may be given when the user reaches a boundary, e.g., while controlling an element of the user interface or a device via gesture control. For example, if the user controls a virtual rotational element (e.g., rotational knob) via gesture control, the third level or third pattern of tactile feedback may be provided when the rotational element is at an extreme position (e.g., lowest or highest allowed position). Similarly, if the user controls movement of a device, such as a microscope, the third level or third pattern of tactile feedback may be provided when the position of the device reaches a limit, e.g., due to stability restrictions or due to a limit of an actuator).

In the following, two example implementations are shown. In Fig. 1b, an example is shown where the user interface is displayed on a display device (such as a screen). Fig. 1b shows a schematic diagram of examples of points of reference when the user interface is shown on a screen. Fig. 1b shows a user interface 100. Two stereo cameras 170 are arranged above (or below) the user interface 100, having two partially overlapping fields of view 170a, 170b. The stereo cameras provide stereo imaging sensor data, which are used to determine the two points of reference - the first point of reference 120 at the position of an eye 12 of a user 10, and the second point of reference 130 at the position of a fingertip 16a (of the index finger) of the hand of the user. Through the first and second point of reference, an imaginary line 140 is projected, pointing at a position in the user interface 100.

In Fig. 1c, a different paradigm is used. In this case, the user interface 100 can be either a projected user interface, e.g., a user interface that is projected onto a projection surface, or the user interface can be a haptic user interface (indicated by the zig-zag shape) that is arranged at one or multiple devices being controlled by the system. Fig. 1c shows a schematic diagram of examples of points of reference when the user interface is projected or a haptic user interface of a device. In the example of Fig. 1c, a depth sensor 160 and a camera sensor 150 are used to generate RGB-D sensor data, which is processed by the system 110 to determine the first point of reference 120 and the second point of reference 130. An imaginary line 140 is projected towards the user interface. In one case, the user interface is projected by projection device 185 onto a projection surface 185a. Alternatively, only indicators might be projected onto the projection surface 185a. For example, the projection signal may comprise at least one of a positional indicator for highlighting the determined position of the haptic user interface, an indicator for highlighting the element of the haptic user interface, and a visual representation of the identified hand gesture.

As shown in one interpretation of Fig. 1c, the user interface may be a haptic, real-world user interface, as indicated by the rotational knob shown as part of the user interface 100. Alternatively, the knob may be part of the projected user interface. In the example of Fig. 1c, the position in the user interface intersects with the (real-world or projected) rotational knob, such that the rotational knob is determined as user interface element and/or such that the device comprising the rotational knob is determined as device. The rotational knob may now be controlled via a hand gesture, e.g., in the projected user interface, or by controlling the control functionality associated with the knob. In other words, if the user interface is a haptic user interface of a physical device, the determined element may be an element of the haptic user interface. Similarly, the determined device may be a device that is accessible (i.e., controllable) via the haptic user interface. In this case, the system may be configured to control a control functionality associated with the element of the haptic user interface (e.g., without turning the knob or pressing a button of the haptic user interface) and/or associated with the determined device. This way, the user can control the device or user interface element in a way that is not unlike telekinesis.

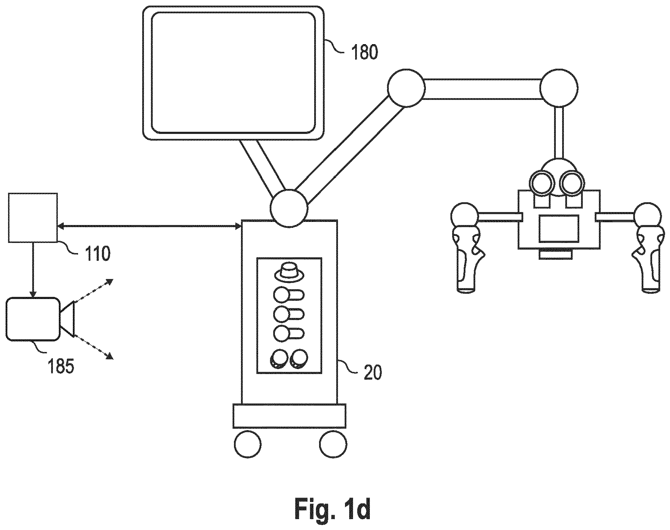

Such ways of controlling a user interface are particularly useful in scenarios, where, due to hygiene or as the user is unable to move around, a user is unable to control the user interface by touch. Such a scenario can, for example, be found in surgical theatres, where a surgeon seeks to control a surgical imaging device, such as a surgical microscope or surgical exoscope (also sometimes called an extracorporeal telescope), or other devices, such as an endoscope, an OCT (Optical Coherence Tomography) device. Exoscopes are camera-based imaging systems, and in particular camera-based 3D imaging systems, which are suitable for providing images of surgical sites with high magnification and a large depth of field. Compared to microscopes, which may be used via oculars, exoscopes are only used via display modalities, such as monitor or a head-mounted display. Such devices are usually part, or attached to, a surgical imaging system, such as a surgical microscope system or a surgical exoscope system. Thus, the system may be configured to control a user interface of the surgical microscope system (and connected devices). Fig. 1d shows a schematic diagram of an example of a surgical imaging system comprising the system 110. In the case shown in Fig. 1d, the surgical microscope system shown in Fig. 1d comprises a base unit 20 with a haptic user interface (indicated by the knobs and buttons). Using the projection device 185, the aforementioned indicators may be projected onto the haptic user interface. During surgery, the surgeon (or an assistant) may point towards the haptic user interface, e.g., the knobs and buttons, and control the control functionality associated with the different elements of the user interface using hand gestures.

In some examples, the system 110 may be an integral part of such a surgical imaging system and may be used to control various aspects of the optical imaging system 100. In particular, the system 110 may be used to process imaging data of an imaging device (e.g., the microscope or exoscope) of the optical imaging system, and to generate a display signal based on the image data. Therefore, the system 110 may also serve as an image processing system of the surgical imaging system. In addition, the system 110 may be configured to control additional aspects of the surgical imaging system, such as an illumination provided by the surgical imaging system, a placement of the imaging device relative to a surgical site being imaged, or one or more auxiliary surgical devices being controlled via the surgical imaging device.

A surgical imaging system is an optical imaging system 100 that comprises a (surgical) imaging device, such as a digital stereo microscope, an exoscope or an endoscope, as imaging device. However, the proposed concept is not limited to such embodiments. For example, the imaging device is often also called the "optics carrier" of the surgical imaging system.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

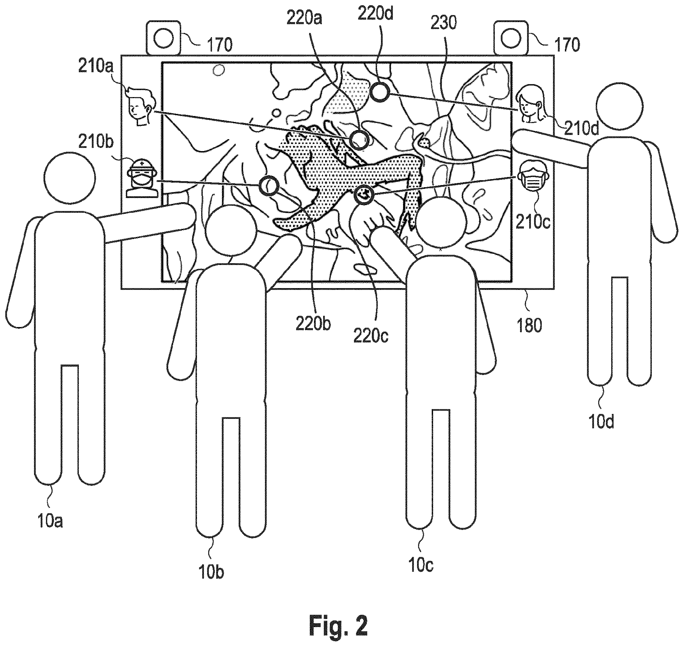

More details and aspects of the system are mentioned in connection with the proposed concept, or one or more examples described above or below (e.g., Fig. 2 to 4). The system may comprise one or more additional optional features corresponding to one or more aspects of the proposed concept, or one or more examples described above or below.

In some examples, the techniques discussed in connection with Figs. 1a to 1d may be used for contactless collaboration, e.g., to support contactless pointing on a monitor for collaboration. A technology is proposed that allows multiple users to point at the display simultaneously. The proposed concept uses a contactless detection of each user's pointing area, as described in connection with Figs. 1a to 1d, and visualizes the pointing areas, together with a representation of the users, on the screen (see Fig. 2). Fig. 2 shows a schematic diagram of a visualization of multiple users 10a-10d, and in particular a visualization of pointing of multiple users at a screen. As shown in Fig. 2, the visualization may contain different components - an image or avatar 210a-210d representing the respective users, a highlighted area 220a-220d (e.g., highlighted by a circle, or "cursor"), and a visual link 230 between the two image/avatar and the highlighted portion. This allows an easy, fast, precise, and intuitive communication between the users. The users do not need to use any additional equipment such as handheld devices or wearing eye-trackers. Multiple users are supported, limited only by the resolution and the field of view of the cameras. In some examples, the technique does not require user-pointer assignment, e.g., if the face of each user is shown in real time.

Such a visualization may be implemented using the techniques discussed in connection with Figs. 1a to 1d. In particular, in terms of the system discussed in connection with Figs. 1a to 1d, the system is configured to determine a position in the user interface based on the first point of reference and the second point of reference, and to determine the response by determining an identity of the user 10a-d, and generating a visual representation 210a-d, 220a-d, 230 of the user pointing towards the position in the user interface based on the determined identity of the user and based on the determined position in the user interface. The system is configured to generate a display signal comprising the user interface with the visual representation of the user pointing towards the position in the user interface, and to provide the display signal to a display device 180. This visual representation is a visualization of the user pointing at the user interface, and therefore the collaborative screen. In other words, the user interface is shown on the display device 180, and the user is pointing towards the display device 180 on which the user interface is shown.

The system is configured to generate a visual representation of the user pointing towards the position in the user interface. This visualization necessarily includes at least two components - an indication of the position in the user interface, and a representation of the user. In addition, a link between the position and the user helps other users associate the position with the position in the user interface. Accordingly, the system may be configured to generate the visual representation of the user pointing towards the position in the user interface with a positional indicator 220a-d highlighting the determined position in the user interface, an indicator 210a-d representing the identity of the user and a visual link between the positional indicator and the indicator representing the identity of the user. In Fig. 2, the positional indicator is a circle 220a-220d highlighting the respective position in the user interface. However, alternative positional indicators are possible, such as circular pattern having a different brightness etc.

The indicator representing the identity of the user is a (real-time or stored) image 210a-210d of the user in Fig. 2. In other words, the indicator representing the identity of the user may comprise an image or an avatar of the user. For this purpose, the image may be recorded using a camera, e.g., a camera being used to determine the positions of the points of reference. In other words, the system may be configured to obtain imaging sensor data (e.g., camera sensor data) of a camera sensor 160, 170 (e.g., of a camera or stereo camera), with the imaging sensor data showing at least the user. This imaging sensor data may be used to generate the image (or the avatar) of the user. In other words, the system may be configured to generate the image, or the avatar of the user based on the imaging sensor data. For example, the system may be configured to generate (and continuously update) a real-time image of the user based on the imaging sensor data. If only the image of the user is shown, the actual identity of the user need not be determined. In this case, determining the identity of the user corresponds to linking a user with an image or avatar, with the image or avatar representing the identity of the user. In other words, the image or avatar may correspond to the identity of the user in this case, without requiring actual identification of the user.

If the identity of the user is to be shown, e.g., alongside the image/avatar or without showing the image/avatar, the identity of the user may be determined. For example, the system may be configured to determine the identity of at least the user based on the imaging sensor data. For example, the system may be configured to use machine-learning to determine the identity of the user (and of other users using the system). For example, the system may be configured to process the image of the user (from the imaging sensor data) using a machine-learning model being trained to determine a feature vector representing the user, e.g., a machine-learning model trained for person reidentification, or a deterministic algorithm for determining the feature vector. The resulting feature vector (or reidentification code) may then be compared to feature vectors/reidentification codes of known users stored in a database to identify the user. Using the identity of the user, an avatar of the user, or a textual representation (which may include the name and/or the title/job of the user) may be loaded and displayed by the system. In other words, the indicator representing the identity of the user may comprise a textual representation of the identity of the user. In other words, identification of the pointers may be done using face recognition and visualized as contact photo, avatar, or name.

As shown in Fig. 2, a visual link 230 may be displayed between the positional indicator 220 and the indicator 210 representing the user. In Fig. 2, lines are used as visual links 230 between the two items. Alternatively, the indicator 210 representing the user may be shown in close proximity to the positional indicator 220, thereby creating a contextual visual link between the two components of the visual representation of the user pointing towards the position in the user interface.

As previously discussed in connection with Figs. 1a to 1d, various sensors may be used to determine the positions of the points of reference. In the present application of the concept, the same sensors (or a different sensor) may also be used for generating the imaging sensor data being used to identify the user or to generate an image of the user as indicator representing the identity of the user. For example, the system may be configured to process at least one of depth sensor data of a depth sensor 160, imaging sensor data of a camera sensor 150 and stereo imaging sensor data of a stereo camera 170 to determine at least one of the position of the first point of reference and the position of the second point of reference, the image of the user and the identity of the user. At least the positions of the points of reference may be determined using a skeletal model. For example, the system may be configured to determine the positions of joints of a skeletal model of the body of the user by processing the respective sensor data, and to determine at least one of the position of the first point of reference and the position of the second point of reference based on the positions of the joints of the skeletal model. The skeletal model may also be used for generating the image of the user (by identifying the position of the head of the user using the skeletal model and cropping the imaging sensor data based on the position of the head of the user), and/or for identifying the user (e.g., by determining the feature vector at least partially based on the skeletal model).

The generation of a visual representation of a user pointing at a position in the user interface is particularly useful in scenarios, where multiple users point at the content at the same time, e.g., during a discussion or medical consultation. Therefore, the concept is applicable to multiple users. In other words, multiple visual representations of a user pointing at a position in the user interface may be shown at the same time as part of the user interface. In other words, the aforementioned user may be a first user 10a and the position in the user interface may be a first position in the user interface. The system may be further configured to determine a second position in the user interface for a second user 10b, and to determine the identity the second user. The system may be configured to generate a visual representation of the first user pointing towards the first position in the user interface and of the second user pointing towards the second position in the user interface, and to generate the display signal comprising the user interface with the visual representation of the first user pointing towards the first position in the user interface and of the second user pointing towards the second position in the user interface. In other words, the visual representation of the first user pointing at a first position in the user interface is extended with a visual representation of a second user (third user, fourth user) pointing at a second (third, fourth) position in the user interface.

This second user may be a local user, pointing at the same display device as the first user. In this case, the act of determining the second position in the user interface may be based on a first point of reference and a second point of reference determined for the second user. In other words, the system may be configured to determine a first point of reference and a second point of reference for the second user, and to determine the second position in the user interface based on the first point of reference and second point of reference determined for the second user.

Alternatively, or additionally, the collaboration may include multiple systems, physically separated so that users in different rooms can collaborate. In this case, the relevant information may be received from the remote system. In other words, the act of determining the second position in the user interface and the act of determining the identity of the second user may comprise obtaining information on the second position in the user interface and information on the identity of the second user from a further system being remote from the system. In other words, the system may be configured to determine the second position in the user interface and the identity of the second user by receiving information on the second position in the user interface and the identity of the second user from the further system. Similarly, the respective information of the first user may be provided to the further system as well, for display by the further system. For example, the system may be configured to provide information on the (first) position in the user interface and information on the identity of the (first) user to the further system being remote from the system.

When multiple users use the user interface, it is rare that all user point at the display device at the same time. Inactive users, i.e., users not pointing at the screen may be shown without assigning a cursor, for example.

The multi-user collaboration is based on the concepts introduced in connection with Figs. 1a to 1d. In particular, features, such as gesture control, may be used with the present application. For example, users may use gestures to do additional actions such as cast a vote, leave a flag (with their name or face), draw a shape, move an object etc.

More details and aspects of the concept for contactless collaboration are mentioned in connection with the proposed concept or one or more examples described above or below (e.g. Fig. 1a to 1d, 3 to 4). The concept for contactless collaboration may comprise one or more additional optional features corresponding to one or more aspects of the proposed concept, or one or more examples described above or below.

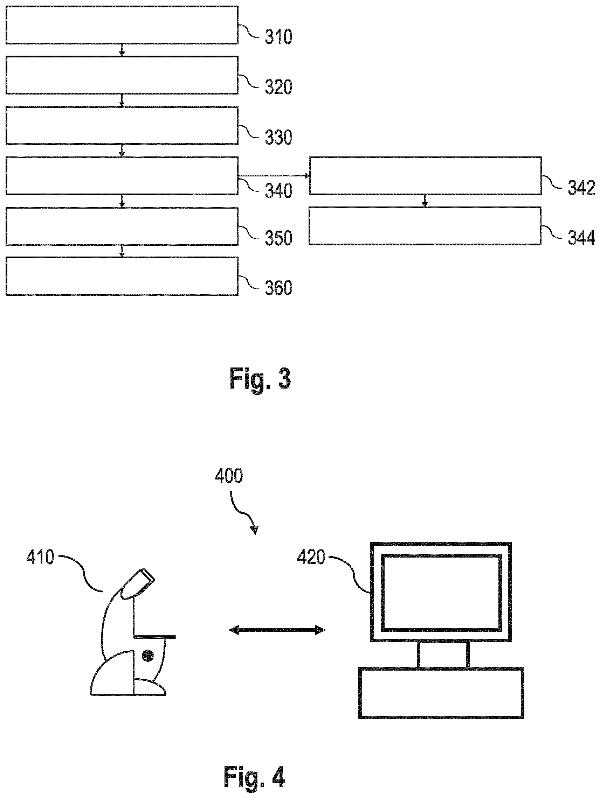

Fig. 3 shows a flow chart of an example of a corresponding method for controlling a user interface, e.g., in line with the system of Figs. 1a to 2. The method comprises determining 310 a position of a first point of reference based on a position of a first point on the body of a user. The method comprises determining 320 a position of a second point of reference based on a position of a pointing indicator used by the user. The method comprises determining 330 a position in the user interface based on the first point of reference and the second point of reference. The method comprises determining 340 a response based on the determined position in the user interface. The act of determining the response comprises determining 342 an identity of the user, and generating 344 a visual representation of the user pointing towards the position in the user interface based on the determined identity of the user and based on the determined position in the user interface. The method comprises generating 350 a display signal comprising the user interface with the visual representation of the user pointing towards the position in the user interface. The method further comprises providing 360 the display signal to a display device.

For example, the method may be performed by the system and/or surgical imaging system introduced in connection with one of the Figs. 1a to 2, 4. Features introduced in connection with the system and optical imaging system of one or more of Figs. 1a to 2, 4 may likewise be included in the corresponding method.

More details and aspects of the method are mentioned in connection with the proposed concept, or one or more examples described above or below (e.g., Fig. 1a to 2, 4). The method may comprise one or more additional optional features corresponding to one or more aspects of the proposed concept, or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to an imaging device, such as a microscope or exoscope, comprising a system as described in connection with one or more of the Figs. 1a to 3. Alternatively, an imaging device, such as a microscope or exoscope, may be part of or connected to a system as described in connection with one or more of the Figs. 1a to 3. Fig. 4 shows a schematic illustration of a system 400 configured to perform a method described herein. The system 400 comprises an imaging device 410 (such as a microscope or exoscope) and a computer system 420. The imaging device 410 is configured to take images and is connected to the computer system 420. The computer system 420 is configured to execute at least a part of a method described herein. The computer system 420 may be configured to execute a machine learning algorithm. The computer system 420 and imaging device 410 may be separate entities but can also be integrated together in one common housing. The computer system 420 may be part of a central processing system of the imaging device 410 and/or the computer system 420 may be part of a subcomponent of the imaging device 410, such as a sensor, an actor, a camera, or an illumination unit, etc. of the imaging device 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of reference Signs

- 10: User
- 12: Eye
- 16: Hand
- 16a: Finger
- 16b: Wrist
- 20: Base unit of surgical microscope system with haptic user interface
- 100: Surgical microscope system
- 110: System
- 120: First point of reference
- 130: Second point of reference
- 140: Imaginary line
- 150: Camera sensor
- 160: Depth sensor
- 170: Stereo sensor
- 180: Display device, screen
- 185: Projection device
- 190: Emitter
- 210a-d: Indicator representing a user
- 220a-d: Positional indicator
- 230: Visual link
- 310: Determining a position of a first point of reference
- 320: Determining a position of a second point of reference
- 330: Determining a position in the user interface
- 340: Determining a response
- 342: Determining an identity of a user
- 344: Generating a visual representation
- 350: Generating a display signal
- 360: Providing the display signal
- 400: System
- 410: Imaging device
- 420: Computer system

## Claims

1. A system (110) for controlling a user interface (100), the system comprising one or more processors (114), wherein the system is configured to:
determine a position of a first point of reference (120) based on a position of a first point (12) on the body of a user (10);
determine a position of a second point of reference (130) based on a position of a pointing indicator (16) used by the user;
determine a position in the user interface based on the first point of reference and the second point of reference; and
determine a response based on the determined position in the user interface, the act of determining a response comprising determining an identity of the user (10a-d), and generating a visual representation (210a-d; 220a-d; 230) of the user pointing towards the position in the user interface based on the determined identity of the user and based on the determined position in the user interface;
generate a display signal comprising the user interface with the visual representation of the user pointing towards the position in the user interface; and
provide the display signal to a display device (180).

2. The system according to claim 1, wherein the system is configured to generate the visual representation of the user pointing towards the position in the user interface with a positional indicator (220a-d) highlighting the determined position in the user interface, an indicator (210a-d) representing the identity of the user and a visual link between the positional indicator and the indicator representing the identity of the user.

3. The system according to claim 2, wherein the indicator representing the identity of the user comprises a textual representation of the identity of the user.

4. The system according to one of the claims 2 or 3, wherein the indicator representing the identity of the user comprises an image or an avatar of the user.

5. The system according to one of the claims 1 to 4, wherein the user is a first user (10a) and the position in the user interface is a first position in the user interface, the system being further configured to determine a second position in the user interface for a second user (10b), to determine the identity the second user, and to generate a visual representation of the first user pointing towards the first position in the user interface and of the second user pointing towards the second position in the user interface, and to generate the display signal comprising the user interface with the visual representation of the first user pointing towards the first position in the user interface and of the second user pointing towards the second position in the user interface.

6. The system according to claim 5, wherein the act of determining the second position in the user interface is based on a first point of reference and a second point of reference determined for the second user.

7. The system according to claim 5, wherein the act of determining the second position in the user interface and the act of determining the identity of the second user comprises obtaining information on the second position in the user interface and information on the identity of the second user from a further system being remote from the system.

8. The system according to one of the claims 1 to 7, wherein the system is configured to provide information on the position in the user interface and information on the identity of the user to a further system being remote from the system.

9. The system according to one of the claims 1 to 8, wherein the system is configured to obtain imaging sensor data of a camera sensor (160, 170), and to determine the identity of at least the user based on the imaging sensor data, the imaging sensor data showing at least the user.

10. The system according to one of the claims 1 to 9, wherein the system is configured to process at least one of depth sensor data of a depth sensor (160), imaging sensor data of a camera sensor (150) and stereo imaging sensor data of a stereo camera (170) to determine at least one of the position of the first point of reference and the position of the second point of reference, and an identity of the user.

11. The system according to claim 10, wherein the system is configured to determine the positions of joints of a skeletal model of the body of the user by processing the respective sensor data, and to determine at least one of the position of the first point of reference and the position of the second point of reference based on the positions of the joints of the skeletal model.

12. A method for controlling a user interface, the method comprising:
determining (310) a position of a first point of reference based on a position of a first point on the body of a user;
determining (320) a position of a second point of reference based on a position of a pointing indicator used by the user;
determining (330) a position in the user interface based on the first point of reference and the second point of reference;
determining (340) a response based on the determined position in the user interface, wherein the act of determining the response comprises determining (342) an identity of the user, and generating (344) a visual representation of the user pointing towards the position in the user interface based on the determined identity of the user and based on the determined position in the user interface;
generating (350) a display signal comprising the user interface with the visual representation of the user pointing towards the position in the user interface; and providing (360) the display signal to a display device.

13. Computer program with a program code for performing the method according to claim 12 when the computer program is run on a processor.
